# EUROPEAN PATENT APPLICATION

(11) **EP 4 827 117 A1**
(43) Date of publication of application: **21.10.2026**
(21) Application number: 26173100.4
(22) Date of filing: 17.04.2026
(51) Int. Cl.: H04R 25/00

(54) **METHOD AND SYSTEM FOR ASSISTING A HEARING CARE PROFESSIONAL IN CONFIGURING A HEARING AID SYSTEM**

(30) Priority: 17.04.2025 US 202563790435 P
(71) Applicant: WS Audiology A/S, 3540 Lynge (DK)
(72) Inventor: PELDIUS, Sebastian, 3540 Lynge (DK); JESPERSEN, Caspar Aleksander Bang, 3540 Lynge (DK); OUGAARD, Asger, 3540 Lynge (DK); JOHNSRUDE, Blair Richard, 3540 Lynge (DK); BERTHELSEN, Tina Hildebrandt, 3540 Lynge (DK); HENNINGSEN, Soeren, 3540 Lynge (DK)

(57) **Abstract**

A computer-implemented system (200) for supporting configuration of a hearing aid system acquires patient-specific input data comprising structured intake data and conversational audio (Fig. 2). The data are processed using at least one trained language-processing model to classify hearing-related challenges into impact categories and generate a structured patient profile. Using a stored feature ontology, selectable fitting parameters of hearing-aid fitting software are dynamically constrained to technically permissible parameter combinations correlated with the patient profile, thereby producing a further technical effect.

## Description

### CROSS-REFERENCE TO RELATED APPLICATIONS

This application claims the benefit of U.S. Provisional Application No. 63/790,435, filed April 17, 2025, the entire disclosure of which is incorporated herein by reference.

### BACKGROUND

Generally, a hearing system according to the one or more aspects of the disclosure is understood as meaning any device which provides an output signal that can be perceived as an acoustic signal by a user or contributes to providing such an output signal, and which has means which are customized to compensate for an individual hearing loss of the user or contribute to compensating for the hearing loss of the user. They are, for example, hearing aids which can be worn on the body or by the ear, for example on or in the ear, and which can be fully or partially implanted. However, some devices whose main aim is not to compensate for a hearing loss, may also be regarded as hearing systems, for example consumer electronic devices such as mobile phones and headsets, earbuds or other types of hearables devices provided they have measures for compensating for an individual hearing loss.

Within the present context a traditional hearing aid can be understood as a small, battery-powered, microelectronic device designed to be worn behind or in the human ear by a hearing-impaired user. Prior to use, the hearing aid is adjusted by a hearing aid fitter according to a prescription. The prescription is based on a hearing test, resulting in a so-called audiogram, of the performance of the hearing-impaired user's unaided hearing. The prescription is developed to reach a setting where the hearing aid will alleviate a hearing loss by amplifying sound at frequencies in those parts of the audible frequency range where the user suffers a hearing deficit. A hearing aid may include one or more microphones, a battery, a microelectronic circuit including a signal processor, and an acoustic output transducer. The signal processor is preferably a digital signal processor. The hearing aid is enclosed in a casing suitable for fitting behind or in a human ear.

Within the present context a hearing system may include a single hearing aid (a so called monaural hearing system) or include two hearing aids, one for each ear of the hearing aid user (a so called binaural hearing system). Furthermore, the hearing system may include an external device, such as a smart phone having software applications adapted to interact with other devices of the hearing system. Thus, within the present context the term "hearing system device" may denote a hearing aid or an external device.

The mechanical design of hearing aids has developed into a number of general categories. As the name suggests, Behind-The-Ear (BTE) hearing aids are worn behind the ear. To be more precise, an electronics unit including a housing containing the major electronics parts thereof is worn behind the ear. An earpiece for emitting sound to the hearing aid user is worn in the ear, e.g. in the concha or the ear canal. In a traditional BTE hearing aid, a sound tube is used to convey sound from the output transducer, which in hearing aid terminology is normally referred to as the receiver, located in the housing of the electronics unit and to the ear canal. In other types of hearing aids, a conducting member including electrical conductors conveys an electric signal from the housing and to a receiver placed in the earpiece in the ear. Such hearing aids are commonly referred to as Receiver-In-The-Ear (RITE) hearing aids. In a specific type of RITE hearing aids the receiver is placed inside the ear canal. This category is sometimes referred to as Receiver-In-Canal (RIC) hearing aids.

In-The-Ear (ITE) hearing aids are designed for arrangement in the ear, normally in the funnel-shaped outer part of the ear canal. In a specific type of ITE hearing aids the hearing aid is placed substantially inside the ear canal. This category is sometimes referred to as Completely-In-Canal (CIC) hearing aids. This type of hearing aid requires an especially compact design in order to allow it to be arranged in the ear canal, while accommodating the components necessary for operation of the hearing aid.

Hearing loss of a hearing impaired person is normally frequency-dependent. This means that the hearing loss of the person varies depending on the frequency. Therefore, when compensating for hearing losses, it is advantageous to utilize frequency-dependent amplification.

Additionally, the amplification is level dependent and adapted for compressing the signal in order to control the dynamic range of the output of the hearing aid. The compression can be regarded as an automatic adjustment of the gain levels for the purpose of improving the listening comfort of the user of the hearing aid and the compression may therefore be denoted Automatic Gain Control (AGC). The AGC also provides the gain values required for alleviating the hearing loss of the person using the hearing aid. Compression may be implemented in the way described in the international application WO-A1-9934642.

Finally hearing aids normally include anti-feedback algorithms for continuously measuring input levels and output levels as a function of frequency for the purpose of continuously controlling acoustic feedback instability by providing cancellation signals and through lowering of the frequency dependent gain settings when necessary.

Additionally, it has been suggested to use models for the prediction of the intelligibility of speech after a transmission though a linear system. The most well-known of these models is the "articulation index", the speech intelligibility index, SII, and the "speech transmission index", STI, but other indices exist.

The ANSI S3.5-1969 standard (revised 1997) provides methods for the calculation of the speech intelligibility index, SII. The SII makes it possible to predict the intelligible amount of the transmitted speech information, and thus, the speech intelligibility in a linear transmission system. The SII is a function of the system's transfer function and of the acoustic input, i.e. indirectly of the speech spectrum at the output of the system. Furthermore, it is possible to take both the effects of a masking noise and the effects of a hearing aid user's hearing loss into account in the SII. The SII is always a number between 0 (speech is not intelligible at all) and 1 (speech is fully intelligible). The SII is, in fact, an objective measure of the system's ability to convey speech intelligibility and hereby hopefully making it possible for the listener to understand what is being said.

An increase of gain in the hearing aid will always lead to an increase in the loudness of the amplified sound, which may in some cases lead to an unpleasantly high sound level, thus creating loudness discomfort for the hearing aid user.

The loudness of the output of the hearing aid may be calculated according to a loudness model, e.g. by the method described in an article by B.C.J. Moore and B.R. Glasberg "A revision of Zwicker's loudness model", Acta Acustica Vol. 82 (1996) 335-345, which proposes a model for calculation of loudness in normal-hearing and hearing-impaired subjects. The model is designed for steady state sounds, but an extension of the model allows calculations of loudness of shorter transient-like sounds, too. Reference is made to ISO standard 226 (ISO 1987) concerning equal loudness contours.

EP-B1-1522206 discloses a hearing aid and a method of operating a hearing aid wherein speech intelligibility is improved based on frequency band gain adjustments based on real-time determinations of speech intelligibility and loudness, and which is suitable for implementation in a processor in a hearing aid.

This type of hearing aid and operation method requires the capability of increasing or decreasing the gain as a function of frequency. Additionally, the frequency dependent gain may depend on the current sound situation. For bands with high noise levels, e.g., it may be advantageous to decrease the gain, while an increase of gain can be advantageous in bands with low noise levels, in order to enhance the SII. However, such a simple strategy will not always be an optimal solution, as the SII also takes inter-band interactions, such as mutual masking, into account. A precise calculation of the SII is therefore necessary.

While such a system is generally advantageous it has been found that the amount of gain preferred by an individual hearing aid user may differ from user to user due to the preferences of the individual hearing aid user.

It is not feasible to compute a general relationship between the SII and a given change in amplification gain analytically and therefore some kind of numerical optimization routine is needed to determine this relationship in order to determine the particular amplification gain that gives the largest SII value. However, deriving an optimization routine that provides optimized speech intelligibility in real time using the limited processing resources in a hearing aid is in no way straightforward.

However, in most, if not all, of these gain adjustment methods, the gain levels are modified according to algorithms that have been predefined to reflect requirements for generalized situations, which means that these methods are not specifically optimized neither for the specific user nor for the specific sound environments the specific user is experiencing.

Thus, speech enhancement has been a significant interest to the signal processing community already from the 1960's and earlier, see e.g. Y. Ephraim and D. Malah: "Speech enhancement using a minimum mean-square error short-time spectral amplitude estimator," IEEE Trans. Acoustics, Speech and Signal Processing, vol. ASSP-32, no. 6, pp. 1109-1121, December 1984.

The basic problem concerns the estimation of a clean underlying speech signal from one or more noisy/degraded signals. A more general problem is that of speaker separation, in which one attempts to separate a mixture of (potentially noisy) speech signals into separate clean speech signals.

Hearing impairment limits the ability to cope with background noise. Therefore, a noise reduction (speech enhancement) system is usually seen as an integral part of a hearing aid. When asked about desired improvements of their hearing aids, users often request more effective systems for attenuating (or otherwise managing) background noise.

Traditionally, speech enhancement systems have been based on manually devised statistical models of speech and noise, which in turn lead to signal processing based methods of optimally removing noise from noisy speech. These approaches are limited by the ability to accurately describing speech and noise by statistical models, while keeping these models simple enough to allow closed form derivations of the relevant estimators.

One particularly difficult hearing situation is the so called cocktail party situation where multiple speakers are present at the same time and typically positioned close together.

It has therefore been suggested to provide separation of speakers in order to suppress undesired speakers. Traditionally this has been provided using e.g. various beamforming techniques and more recently speaker separation (which in the following may also be denoted source separation) has been demonstrated based on specifically trained neural networks.

Recently, machine learning (artificial intelligence) has revolutionized speech enhancement (along with many other scientific disciplines). Speech enhancement is essentially a simple regression problem, where a clean signal is estimated from a noisy counterpart. Plentiful training data can easily be obtained by mixing clean speech recordings with separate noise recordings. Proposed methods vary primarily according to their model architecture (how the neural network is configured), the data used for training, and the objective (loss) optimized during training.

However, neither neural network based speech enhancement methods are free from various sound artefacts that results in a less than optimal speech intelligibility and/or perceived sound quality (for the specific user) provided by even the most advanced neural network method.

It is therefore a feature of the invention to provide a method of assisting a hearing care professional to provide the best possible support for her or his patients.

### SUMMARY OF THE INVENTION

The present disclosure relates to computer-implemented techniques for assisting a hearing care professional in configuring a hearing aid system for a hearing-impaired patient, and in particular to systems, methods, and computer-readable media that automatically transform patient-specific information into actionable configuration guidance within hearing aid fitting software.

In one aspect, the disclosure provides a computer-implemented system including a plurality of functional subsystems configured to acquire and process patient-specific data, including structured intake data and audio data from a recorded conversation between the patient and the hearing care professional. The system further includes a language-processing subsystem configured to generate transcript data from the recorded audio and to extract and label patient-specific descriptors indicative of hearing-related challenges, including emotional, lifestyle, or usability-related attributes expressed by the patient. A classification subsystem maps the extracted descriptors into a predefined set of hearing-related impact categories represented in a maintained data model, and a summarization subsystem generates a structured patient profile including a normalized and prioritized representation of the impact categories. Based on the structured patient profile, a feature-matching subsystem automatically determines one or more candidate hearing aid system features or hearing aid types using a stored feature ontology that relates hearing aid capabilities to the hearing-related impact categories. A personalization subsystem generates configuration-support data associated with the candidate features, and an interface component presents the configuration-support data in association with selectable options of hearing aid fitting software, while dynamically constraining, modifying, or prioritizing said options.

In another aspect, the disclosure provides a computer-implemented method for assisting a hearing care professional in configuring a hearing aid system. The method includes acquiring patient-specific data including structured intake data and recorded audio data, transcribing the audio data to generate transcript data, processing the structured intake data and transcript data using at least one trained language-processing model to extract and label patient-specific hearing-related descriptors, and classifying the descriptors into predefined hearing-related impact categories. The method further includes generating a structured and prioritized patient profile from the classified descriptors, automatically determining candidate hearing aid system features corresponding to the patient profile using a feature ontology, generating configuration-support data adapted to patient-specific attributes, and dynamically constraining or prioritizing selectable fitting options within hearing aid fitting software while presenting the configuration-support data in association therewith. Through execution of the method, a machine-generated and traceable linkage is established between patient-specific hearing-related challenges and hearing aid configuration options.

In some embodiments, dynamically constraining selectable fitting options comprises restricting hearing aid configuration to technically permissible parameter combinations correlated with the structured patient profile via the stored feature ontology. The dynamic constraint modifies internal operation of the hearing-aid fitting software by preventing application or transmission of incompatible parameter combinations, thereby producing a further technical effect in the operation of the fitting software.

In a further aspect, the disclosure provides a non-transitory computer-readable medium storing executable instructions which, when executed by one or more processors, cause a computing system to perform the operations of the disclosed method and thereby configure the system to provide patient-aligned hearing aid configuration support.

Advantageously, the disclosed techniques enable technically consistent, explainable, and patient-aligned hearing aid configuration by integrating language-based patient input, structured clinical data, and hearing aid capability models directly into the fitting software workflow, thereby supporting improved counseling efficiency, transparency, and outcome alignment without requiring changes to underlying hearing aid hardware.

Further advantageous features appear from the dependent claims.

Still other features of the present invention will become apparent to those skilled in the art from the following description wherein the invention will be explained in greater detail.

### BRIEF DESCRIPTION OF THE DRAWINGS

The accompanying drawings are included to provide a further understanding of the present disclosure and are incorporated in and constitute a part of this specification. The drawings illustrate example embodiments and, together with the description, serve to explain the principles of the disclosure.
Fig. 1 is a flow diagram illustrating an example of a computer-implemented method for assisting a hearing care professional in configuring a hearing aid system for a hearing-impaired patient, according to certain embodiments of the present disclosure.
Fig. 2 is a schematic block diagram illustrating an example of a computer-implemented system including functional subsystems configured to perform the method of Fig. 1 and to generate configuration-support data for use in hearing aid fitting software, according to certain embodiments of the present disclosure.
Fig. 3 is a block diagram illustrating an example computing system for implementing the computer-implemented system and method for assisting a hearing care professional in configuring a hearing aid system.

### DETAILED DESCRIPTION

The following detailed description is provided to assist the reader in gaining a comprehensive understanding of the methods, apparatuses, and systems described herein. However, various changes, modifications, and equivalents of the methods, apparatuses, and systems described herein will be apparent after an understanding of the disclosure of this application. The described embodiments are provided as examples only, and the disclosure is not limited thereto.

Unless otherwise indicated, all numbers expressing quantities, dimensions, conditions, and so forth used in the specification and claims are to be understood as being modified in all instances by the term 'about.'

The terminology used herein is for the purpose of describing particular embodiments only and is not intended to be limiting. As used herein, the singular forms 'a,' 'an,' and 'the' are intended to include the plural forms as well, unless the context clearly indicates otherwise. It will be further understood that the terms 'comprises' and 'comprising,' when used in this specification, specify the presence of stated features, steps, operations, elements, and/or components, but do not preclude the presence or addition of one or more other features, steps, operations, elements, components, and/or groups thereof.

References to 'one embodiment,' 'an embodiment,' 'example embodiment,' 'various embodiments,' and the like indicate that the embodiments so described may include a particular feature, structure, or characteristic, but not every embodiment necessarily includes the particular feature, structure, or characteristic. Further, repeated use of the phrase 'in one embodiment' does not necessarily refer to the same embodiment, although it may.

The corresponding structures, materials, acts, and equivalents of all means or step plus function elements in the claims below are intended to include any structure, material, or act for performing the function in combination with other claimed elements as specifically claimed.

As used herein, the terms 'module,' 'unit,' 'component,' 'subsystem,' 'engine,' and 'system' refer to, but are not limited to, a hardware circuit, such as a processor, an application-specific integrated circuit (ASIC), a field-programmable gate array (FPGA), or a digital signal processor (DSP); a software component executing on a hardware processor; a firmware component; or any combination thereof. A module, unit, component, subsystem, engine, or system may be implemented entirely in hardware, entirely in software executing on one or more processors, or as any combination of hardware and software. For example, the language-processing subsystem, the classification subsystem, the summarization subsystem, the feature-matching subsystem, the personalization subsystem, and the behavioral analytics engine described herein may each be implemented as software modules executing on one or more general-purpose or special-purpose processors, as dedicated hardware accelerators, or as a combination thereof. When implemented in software, the modules, units, components, subsystems, engines, and systems may be stored as computer-executable instructions on one or more non-transitory computer-readable storage media and executed by one or more processors.

The block diagrams and flow diagrams in the accompanying drawings illustrate the architecture, functionality, and operation of possible implementations of systems, methods, and computer-readable media according to various embodiments of the present disclosure. In this regard, each block in the block diagrams or flow diagrams may represent a module, segment, or portion of instructions, which includes one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved.

While the present disclosure has been described with reference to specific embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiments disclosed, but that the present disclosure will include all embodiments falling within the scope of the appended claims.

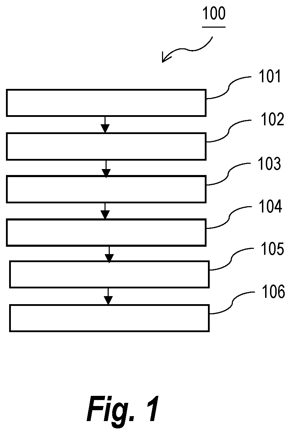

Figure 1: Computer implemented method for assisting a hearing care professional Referring now to Fig. 1, a computer-implemented method 100 is illustrated for assisting a hearing care professional in configuring a hearing aid system for a hearing-impaired patient.

The method begins at step 101 with acquiring patient-specific data, including structured intake data obtained from a completed intake form and audio data from a recorded conversation between the patient and the hearing care professional.

At step 102, the recorded audio data is transcribed to generate transcript data.

The method further includes, at step 103, processing the structured intake data and the transcript data using at least one trained language-processing model in order to extract and label patient-specific descriptors indicative of hearing-related challenges expressed by the patient, including emotional, lifestyle, or usability-related attributes.

At step 104, the extracted and labelled descriptors are classified by mapping them into a predefined set of hearing-related impact categories represented in a data model maintained by the system.

The method then includes, at step 105, generating a structured patient profile from the classified descriptors, the structured patient profile including a normalized representation of the patient-specific impact categories and a prioritization of said impact categories based on occurrence frequency or contextual relevance within the acquired patient-specific data. Based on the structured patient profile, the method further includes automatically determining one or more candidate hearing aid system features or hearing aid types using a stored feature ontology that relates hearing aid system capabilities to hearing-related impact categories.

At step 106, configuration-support data associated with the candidate hearing aid system features is generated, the configuration-support data including explanatory or instructional content adapted to patient-specific attributes represented in the structured patient profile, and selectable fitting options within hearing aid fitting software are dynamically constrained, modified, or prioritized based on the determined candidate features, with the configuration-support data presented in association therewith.

In one embodiment, dynamically constraining selectable fitting options comprises disabling or preventing selection of fitting parameter combinations that are technically incompatible according to the stored feature ontology, such that only technically permissible signal-processing states can be applied.

Through execution of the method 100, a machine-generated, traceable linkage is established between patient-specific hearing-related challenges and hearing aid configuration options within the hearing aid fitting software.

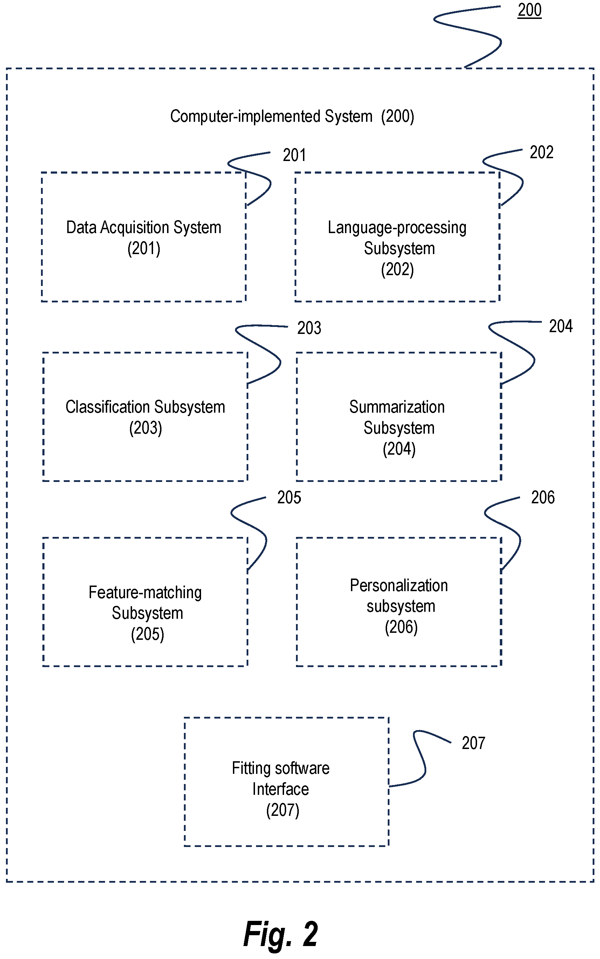

Figure 2: A computer implemented system for assisting a hearing care professional Referring now to Fig. 2, an embodiment of a computer-implemented system 200 is illustrated for assisting a hearing care professional in configuring a hearing aid system for a hearing-impaired patient.

The system 200 includes a data acquisition system 201 configured to acquire patient-specific data including structured intake data and audio data from a recorded conversation, and a language-processing subsystem 202 configured to process the acquired data, including generating transcript data and extracting and labelling patient-specific descriptors indicative of hearing-related challenges.

The system further includes a classification subsystem 203 configured to map the extracted descriptors into predefined hearing-related impact categories represented in a maintained data model, and a summarization subsystem 204 configured to generate a structured patient profile including a normalized and prioritized representation of said impact categories.

A feature-matching subsystem 205 is configured to determine one or more candidate hearing aid system features corresponding to the structured patient profile using a stored feature ontology and a personalization subsystem 206 is configured to generate configuration-support data including explanatory or instructional content adapted to patient-specific attributes represented in the structured patient profile.

The system 200 further includes an interface component 207 operatively coupled to hearing aid fitting software to present the configuration-support data in association with selectable fitting options and to dynamically constrain, modify, or prioritize said options.

In some embodiments, the interface component 207 is configured to dynamically constrain selectable fitting parameters processed by the hearing-aid fitting software by enforcing predefined permissible parameter range profiles stored in association with the feature ontology. The interface component may prevent simultaneous selection of parameter combinations that are technically incompatible and may block transmission of impermissible parameter sets to the hearing aid.

The functional subsystems of the computer-implemented system 200 may be realized in hardware, software, or a combination thereof, and in one implementation are embodied as executable instructions stored on a non-transitory computer-readable medium which, when executed by one or more processors, cause a system to perform the operations described herein.

Accordingly, Fig. 2 provides support for both a computer-implemented system and a non-transitory computer-readable medium storing instructions which, when executed, configure a computing system to assist in hearing aid configuration as claimed.

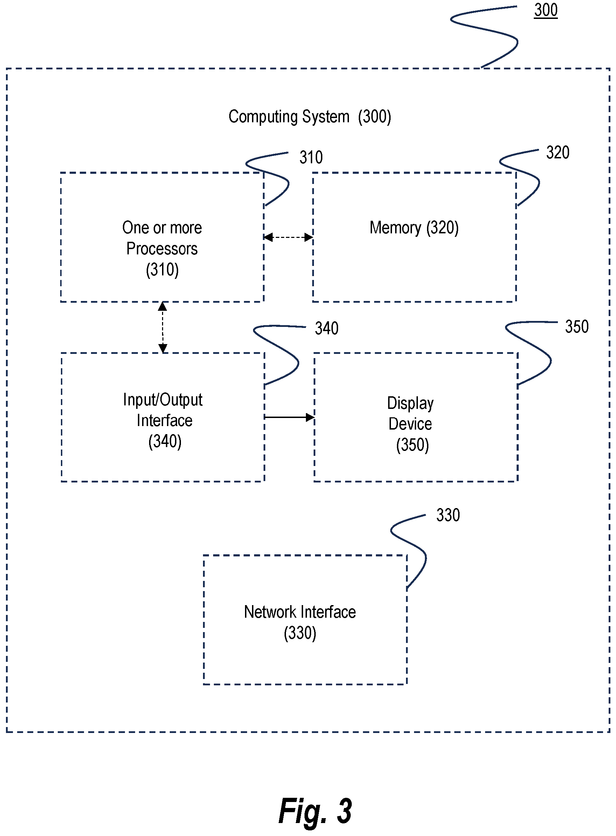

Reference is now given to FIG. 3 illustrating an example computing system 300 suitable for implementing the system 200 and the method 100 described herein.

The computing system 300 includes one or more processors 310 and a memory 320 coupled to the one or more processors 310. The memory 320 stores computer-executable instructions that, when executed by the one or more processors 310, cause the computing system 300 to perform the operations described with reference to FIGS. 1 and 2, including the operations of the data acquisition system 201, the language-processing subsystem 202, the classification subsystem 203, the summarization subsystem 204, the feature-matching subsystem 205, the personalization subsystem 206, and the fitting software interface 207.

The one or more processors 310 may include one or more central processing units (CPUs), graphics processing units (GPUs), application-specific integrated circuits (ASICs), field-programmable gate arrays (FPGAs), digital signal processors (DSPs), or any combination thereof. For example, the one or more processors 310 may be processors of a clinic workstation running the hearing-aid fitting software, processors of a cloud-based server that performs the language processing and feature matching, or processors of a mobile device such as a smartphone or tablet used by the hearing care professional.

The memory 320 may include one or more of random-access memory (RAM), read-only memory (ROM), flash memory, solid-state storage, magnetic storage, optical storage, or any other non-transitory computer-readable storage medium. For example, the memory 320 may store the stored feature ontology, the data model representing hearing-related impact categories, trained language-processing model parameters, historical patient outcome data, and structured patient profiles. The memory 320 stores the computer-executable instructions as well as data including audio recordings, transcript data, structured intake data, and generated configuration-support data.

The computing system 300 further includes a network interface 330 configured to communicate with one or more external devices over a network. For example, the network interface 330 may communicate over a local area network within a clinic, over the internet to a cloud-based language-processing service, or via a wireless connection such as Bluetooth or Wi-Fi to a smartphone or tablet used for recording the conversation between the patient and the hearing care professional.

The computing system 300 further includes an input/output interface 340 coupled to the one or more processors 310. The input/output interface 340 is configured to receive input from one or more input devices, such as a keyboard, mouse, touchscreen, or microphone, and to provide output to one or more output devices, such as a display device 350. For example, the input/output interface 340 may receive audio data from a microphone positioned in a fitting room, receive structured intake data from an electronic intake form, or provide output to a monitor displaying the hearing-aid fitting software interface. The display device 350 is configured to display the configuration-support data in association with selectable fitting options, including guided conversation prompts, natural-language benefit explanations, and justification data, thereby providing the machine-generated, traceable linkage between patient-specific hearing-related challenges and hearing aid configuration options.

The computing system 300 may be implemented as a single device, such as a workstation or server, or as a distributed system including multiple interconnected devices, such as a cloud-based computing platform. In a distributed implementation, the one or more processors 310 and the memory 320 may be distributed across multiple physical or virtual machines, and the operations described herein may be performed by different processors at different locations. For example, in a distributed implementation, a mobile device may capture and transmit the audio recording to a cloud server, the cloud server may perform the language processing, classification, and feature matching using the trained language-processing model and the stored feature ontology, and the generated configuration-support data may be transmitted to the clinic workstation running the hearing-aid fitting software for presentation to the hearing care professional.

In operation, the one or more processors 310 execute the computer-executable instructions stored in the memory 320 to: acquire patient-specific data including structured intake data and audio data; transcribe the audio data to generate transcript data; process the structured intake data and transcript data using at least one trained language-processing model to extract and label patient-specific descriptors; classify the descriptors into hearing-related impact categories; generate a structured patient profile; automatically determine candidate hearing aid system features using the stored feature ontology; generate configuration-support data; and cause the fitting software interface to dynamically constrain, modify, or prioritize selectable fitting options and to present the configuration-support data in association therewith. The dynamic constraint affects internal validation or processing sequences of the fitting software and restricts configuration to technically permissible signal-processing states correlated with the structured patient profile.

### Additional Embodiments and Optional Features

### Guided Conversation Prompts

In one embodiment, the system is further configured to assist the hearing care professional during an appointment by generating guided conversation prompts that are dynamically adapted to the structured patient profile. The personalization subsystem may process the prioritized hearing-related impact categories together with contextual information derived from the transcript data to determine conversational guidance designed to support clarification, confirmation, or explanation of patient-specific challenges. Such guided conversation prompts may be presented via the fitting software interface contemporaneously with selectable fitting options, thereby enabling the hearing care professional to maintain a patient-aligned counseling dialogue while interacting with the hearing aid fitting software. The prompts may be generated in real time or near-real time and may be updated responsively as additional patient input is acquired during the appointment.

### Prompt Framing as Problem-Solution Dialogue

In some embodiments, the guided conversation prompts are structured to frame hearing aid configuration steps or capabilities as responses to patient-expressed real-life challenges rather than as technical specifications. For example, the system may generate prompts that guide the hearing care professional to relate a specific hearing aid setting, program, or capability to an emotional, social, or situational concern identified in the structured patient profile. By explicitly associating configuration actions with patient-aligned outcomes, the system supports transparent and consistent counseling without requiring the hearing care professional to manually translate technical features into patient-specific explanations.

### Feature-to-Benefit Translation

In a further embodiment, the configuration-support data generated by the personalization subsystem includes natural-language explanations that explicitly translate hearing aid system features into patient-relevant benefits. These explanations may be generated by mapping candidate hearing aid system features to the structured patient profile using the stored feature ontology and rendering the mapped relationship as explanatory content understandable to a non-expert patient. Such benefit-oriented explanations may be presented alongside, or in lieu of, purely technical descriptors within the fitting software interface. This translation reduces cognitive load for the patient while preserving traceability between the patient-specific challenges and the underlying hearing aid system capabilities.

### Selective Feature Presentation and Information Reduction

In some implementations, the fitting software interface is further configured to selectively filter, deemphasize, or suppress presentation of hearing aid features that are not correlated to the structured patient profile. The dynamic constraining or prioritizing of selectable fitting options thereby limits the hearing care professional's view to those configuration options determined to be relevant to the patient-specific impact categories. This selective presentation mitigates information overload and supports efficient configuration by focusing interaction with the fitting software on features most likely to address the patient's identified challenges. In addition to visual filtering or deemphasis, the dynamic constraining may (in some embodiments) include enforcing hard technical constraints such that disabled configuration options cannot be applied to the hearing aid system, regardless of user interface interaction.

### Justification of Higher-Priced Hearing Aid Options

According to another embodiment, the personalization subsystem is configured to generate justification data for alternative hearing aid system options, including higher-priced devices or feature sets. The justification data may be generated by associating patient-specific real-life challenges represented in the structured patient profile with corresponding hearing aid system capabilities that differ across price tiers or technology levels. The resulting justification data may include explanatory content describing why a particular device or feature set is technically suited to address the identified challenges. Such justification data may be presented to the hearing care professional alone or formatted for shared presentation to both the hearing care professional and the patient, thereby supporting transparent decision-making.

### Co-Presentation to the Patient

In certain embodiments, the fitting software interface is configured to present portions of the configuration-support data, including benefit explanations and justification data, simultaneously to the hearing care professional and to the patient via a shared display or patient-facing interface. The co-presentation may preserve technical traceability while providing patient-appropriate explanations, allowing the patient to understand how recommended hearing aid options relate to their expressed challenges. This shared presentation further supports informed consent and confidence in the configuration process.

### Metrics Tracking and Counseling Effectiveness

In one embodiment, the system includes a metrics tracking subsystem configured to monitor interaction data generated during counseling and fitting sessions. Such interaction data may include, by way of example, use of guided conversation prompts, sequence of fitting option selections, acceptance or rejection of recommended configurations, hearing aid adoption outcomes, and follow-up behaviors. The monitored data may be aggregated to derive indicators of counseling effectiveness, configuration efficiency, or likelihood of hearing aid adoption, enabling longitudinal analysis across multiple appointments or hearing care professionals.

### Behavioral Analytics and Coaching Feedback

In some embodiments, a behavioral analytics engine processes the tracked performance indicators to identify patterns associated with successful or unsuccessful patient outcomes. Based on this analysis, the system may generate coaching recommendations for the hearing care professional, such as suggesting alternative counseling strategies, adjustments in prompt usage, or different sequencing of configuration explanations. The coaching feedback may be provided post-appointment or in a training context and does not replace the professional judgment of the hearing care professional.

### Historical and Population-Level Outcome Integration

In further embodiments, determining candidate hearing aid system features includes comparison with historical outcome data derived from prior patients exhibiting similar structured patient profiles. Such historical data may be anonymized and stored within the system and used to inform feature matching or prioritization. Incorporation of population-level outcome data enables the system to refine candidate feature determinations over time while maintaining traceable links between patient-specific challenges and hearing aid configuration options.

### Dynamic Constraint Logic and Parameter Compatibility

In some embodiments, the feature ontology defines compatibility relationships between hearing-aid system features and corresponding signal-processing parameters. The fitting control logic applies these relationships to determine technically permissible parameter combinations. When a selected fitting parameter would violate a compatibility rule, the fitting software interface dynamically prevents application of the parameter or disables the conflicting option.

In some implementations, confidence values assigned to hearing-related impact categories are used to control when dynamic constraints are enforced, such that parameter constraints are applied when a confidence value exceeds a predefined threshold.

### Technical Effect and Advantages

Through the integration of language-processing, classification, feature-matching, and interface subsystems as described herein, the disclosed system and method provide a technical mechanism by which patient-expressed challenges are algorithmically transformed into actionable configuration support within hearing aid fitting software. The resulting machine-generated linkage between input data and configuration actions improves consistency, transparency, and efficiency of the hearing aid configuration process while assisting the hearing care professional in aligning technical configuration decisions with patient-specific needs and expectations.

### Additional, Non-Limiting Applications of Conversational Data Processing

The following is independent of the hearing-aid configuration parameter constraint mechanisms described above and is presented as a separate, optional application of conversational data processing.

In the following is described a method for generating a summary of a meeting between a patient and a hearing care professional in prose.

This method is carried out by a system that in the following is denoted Aura.

Aura is a notetaking assistant designed to ease the documentation burden for Hearing Care Professionals (HCPs) and allowing them to focus their efforts on patient care.

Aura includes three separate components, which works together to generate a complete and accurate medical note documenting an audiological appointment between an HCP and a patient: Aura Transcribe

Aura Transcribe is a smartphone app, which uses the smartphone as a recording device. The app allows the HCP to record appointments and send the recordings to the cloud for transcription.

### Aura Helper

Aura Helper is a small app that is installed on the HCP's computer which collects actions taken in the fitting software (FSW)

### Aura Notes

Aura Notes is a web app and the main component of the Aura system. Aura Notes works as a staging area, where the generated notes are presented to the HCP for final refinements. Aura Notes allows HCPs to define their preference for note taking style by presenting a list of presets for note structure and detail levels, and further it allows HCPs to upload a writing sample from which a "writing style" is extracted and imposed on future generated notes.

### How It Works

When recordings from an appointment is sent to the cloud, the recordings are processed by a Speech-to-Text (STT) model, which has been presented with common audiological terms and specific brand vocabulary for improved accuracy on this domain. The recordings are processed as a collection of timestamped utterances, such that a full appointment transcript includes a list of what was said and when.

(A subset of) FSW actions are processed by the Aura Helper app and are timestamped, such that they can be presented in chronological order along with the transcribed utterances.

### Core Summary

The combined list of utterances and FSW actions are presented to a Large Language Model (LLM), which is instructed to provide a summary of the appointment. The LLM has been provided some context about the audiological domain, professional and brand terminology and FSW action interpretations. It has further been instructed in attempting to correct any transcription errors that might occur in the automatic STT model.

The first summary is further refined (filtered) by an LLM which is instructed to only preserve information that is
1. Audiologically relevant
2. Relevant to the HCP

Furthermore, it is tasked with structuring information and making sure that information is only presented once.

As a last step in the summary generation process, the summary is broken down into *atomic facts* by an LLM. An atomic fact is a short, stand-alone fact extracted from the summary. Each fact is reviewed against the transcript by an LLM, which provides a rating of "Yes," "Uncertain" or "No," depending on whether the fact can be verified.

The final verified summary is what we call our *Core Summary.* The Core Summary is our internal representation - or understanding - of what has happened at an appointment, and it is the basis on which appointment notes will be generated.

The Core Summary includes a list of summaries for different topics of the appointment along with a list of relevant quotes (determined by the LLM) from the transcript for each topic. This allows the note generation process to determine exactly how a patient's issue was described or quotes complaints verbatim in the final note.

### Note Generation

The Core Summary is parsed by an LLM which presents the information as an appointment note according to the customization settings for structure and detail. This note is further refined by an LLM which makes sure that the generated note is concise and to the point, refines on structure and detail levels and - if provided - imposes the HCPs personalized writing style on the note.

### Staging

The proposed note is displayed in the Aura Notes web app, where the HCP can change between the different levels of structure and detail, toggle custom style on and off and finally review and edit the note to their satisfaction. The finalized note can then be copied into their respective office management system.

### Fitting software notes enrichment

It is noted that this method and the associated system are especially advantageous compared to known methods and systems due to:
Using timestamping from fitting events (and fitting metadata; hearing aid model selection, acoustical coupling, etc.) to enrich the content of an appointment note such as a summary of a meeting between a patient and a hearing care professional.

The timestamping can be implemented using either of:
a. a separate section in the note / summary disentangled from the remaining content, such as "Fitting information: Did A, B, and C.", or
b. interleaved with the remaining note /summary in a fluid manner, such as "Patient complained about A. Did B and C in fitting software, to which patient reported satisfaction."

### Recommendations in FSW

When opening fitting software during an appointment, Aura can recommend certain actions in the fitting software, for increased efficiency and ease of use. These actions can be
a. actions that have previously been promised/verbalized by the HCP to be performed (e.g. "we can set up a music program for you")
b. actions that are derived by Aura through an internal recommender system

- This can be based on latent processing of the previous conversational content (e.g. patient has a specific complaint in natural language, Aura can then identify possible solutions to said complaint, e.g. through LLM prompting against a solution database, or any more advanced data-informed predictive ML recommender systems)

"Previously" can denote at any previous time during the current appointment, or at any previous time during a prior appointment by the same patient.

Moreover, an implementation can be either one-off or real-time:
- In a one-off implementation (simplest), when opened, the fitting software would request recommendations from Aura based on the conversational content until that point-in-time
- In a real time implementation, Aura needs to continuously classify/observe for whether incoming utterances are actionable (which poses implementation difficulty to do in a scalable and cost-efficient manner, with a sufficiently low latency)

### End-to-end AI Fitting

Aura could be enhanced with
a. instructions in following a certain workflow or fitting policy, and
b. obtain a voice-to-voice conversational interface directly with the patient.

The workflow/fitting policy could include instructions such as "always perform a first fit, followed by in-situ measurements, a feedback test, and then react to feedback from the patient for further tuning".

In that situation, it would be able to conduct a fitting session without involvement from the HCP. The patient could engage in a natural-language conversation with an Aura AI that performs a fitting session with the same capabilities through the fitting software as a traditional HCP would have.

This could either be conducted in the clinic (optionally in a separate room) allowing the HCP to focus on other tasks while Aura is "self-fitting" the hearing aids together with the patient, or it could be enabled for the patient directly through a smart-phone app.

### Sales Recommendations

Selling hearing aids can be an awkward task for many HCPs, and it can be difficult to translate from patient-expressed needs, in their own language, to matching this with newest technology available on the market from manufacturers.

Aura could be used to bridge this gap. Prior, during or after an HAE (hearing aid evaluation) appointment, Aura could
1. retrieve the most recent hearing aid technology and accessories available in a database
   a. (optionally) cross-reference with insurance policy/coverage to filter on available models and/or out-of-pocket price
   b. (optionally) cross-reference with clinic stock database to filter on models available for same-day fitting
2. Process previous patient expressions against list of available models and accessories and derive which matches best.

The results could be presented in a way that the HCP can co-present to the patient, gaining some credibility/backing in a sales situation, offering a way for them to distance themselves from the recommendation. Furthermore, this could apply to different price points of the models.

This system could be extended with a real-time component listening in for patient questions regarding details on the specific models, and Aura providing answers back, either to the HCP directly or to HCP and patient together.

### HCP Training

Aura could be used as a training tool, allowing HCPs to train on certain aspects of their care.

This could be *pro-active,* where Aura is instructed to observing for specific behavior/patterns that the HCP wants to improve in, examples could be e.g.
- "Help me show more empathy towards the patients"

It could also be *reactive,* where Aura is used as a buddy after one or more appointments, where the HCP could ask questions such as
- "What could I have said differently to de-escalate the situation?"
- "How could I cut 10 minutes off my fitting sessions?"

Aura can then go through transcripts and give provocations or recommendations.

### Clinic Insights

Any of the HCP Training insights could be provided for business owners or clinic chains to allow for advanced analytics/insights, potentially unlocking answers to questions such as why one provider is converting much better than another, etc.

### Shop & OMS Integration

Agreements made during an appointment could be integrated with a shop or order management system (OMS), allowing for seamless integration. Examples could be:
"Let's book a follow-up appointment for Monday 25^{th} at 9AM" could automatically draft an appointment booking for said patient at said time, only requiring the HCP to approve.

"I'll order a pair of the hearing aids in the color we agreed" could automatically draft a purchase order draft pending confirmation from HCP.

## Claims

1. A computer-implemented system for supporting configuration of a hearing aid system for a hearing-impaired patient, comprising:
- a data acquisition subsystem configured to acquire patient-specific input data comprising structured intake data and audio data representing a conversation between the patient and a hearing care professional;
- a processing subsystem comprising one or more processors and at least one trained language-processing model, the processing subsystem being configured to derive transcript data from the audio data and to process the structured intake data and the transcript data to extract and label data descriptors indicative of hearing-related challenges;
- a classification subsystem configured to assign the extracted data descriptors to a predefined plurality of hearing-related impact categories represented in a stored data model;
- a profile generation subsystem configured to generate a structured patient profile comprising a normalized representation and a prioritization of the hearing-related impact categories;
- a feature-matching subsystem configured, using a stored feature ontology that relates hearing-aid system capabilities to hearing-related impact categories, to determine a subset of candidate hearing-aid system features corresponding to the structured patient profile; and
- a fitting control interface operatively coupled to hearing-aid fitting software and configured, based on the determined subset of candidate hearing-aid system features, to dynamically constrain selectable fitting parameters processed by the fitting software, wherein the dynamic constraint limits hearing-aid configuration to technically permissible parameter combinations correlated, via the feature ontology, with the structured patient profile, thereby producing a further technical effect in the operation of the hearing-aid fitting software.

2. The system of claim 1, wherein the fitting control interface is configured to dynamically constrain the selectable fitting parameters by preventing simultaneous selection of parameter combinations that are technically incompatible according to the stored feature ontology.

3. The system of any of claims 1 or 2, wherein the candidate hearing-aid system features comprise one or more signal-processing functions selected from noise reduction, directional microphone control, frequency-band gain adjustment, and speech enhancement, and wherein the fitting control interface dynamically adjusts or constrains corresponding signal-processing parameter ranges processed by the fitting software.

4. The system of any of claims 1 to 3, wherein the fitting control interface enforces predefined permissible parameter range profiles stored in association with the feature ontology.

5. The system of any of claims 1 to 4, wherein dynamically constraining selectable fitting parameters comprises disabling configuration options such that the disabled options cannot be applied to the hearing aid system.

6. The system of any of claims 1 to 5, wherein the prioritization of hearing-related impact categories controls an internal validation or processing sequence applied by the fitting software to selectable fitting parameters.

7. The system of any of claims 1 to 6, wherein the classification subsystem assigns confidence values to the hearing-related impact categories, and wherein the fitting control interface applies parameter constraints when the confidence value exceeds a predefined threshold.

8. The system of any of claims 1 to 7, wherein the feature-matching subsystem refines the subset of candidate hearing-aid system features by comparison with stored historical outcome profiles.

9. The system of any of claims 1 to 8, wherein dynamically constraining selectable fitting parameters further comprises visually deemphasizing configuration options that are not correlated with the structured patient profile.

10. The system of any of claims 1 to 9, wherein the extracted data descriptors include descriptors indicative of situational or usability-related hearing challenges expressed in the patient-specific input data.

11. A non-transitory computer-readable medium storing instructions which, when executed by one or more processors of a fitting system, cause the fitting system to perform operations for supporting configuration of a hearing aid system, the operations comprising:
- acquiring patient-specific input data comprising structured intake data and audio data representing a conversation between a patient and a hearing care professional;
- deriving transcript data from the audio data;
- processing the structured intake data and the transcript data using at least one trained language-processing model to extract and label data descriptors indicative of hearing-related challenges;
- classifying the extracted data descriptors into a predefined plurality of hearing-related impact categories represented in a stored data model;
- generating a structured patient profile comprising a normalized representation and a prioritization of the hearing-related impact categories;
- determining, using a stored feature ontology that relates hearing-aid system capabilities to hearing-related impact categories, a subset of candidate hearing-aid system features corresponding to the structured patient profile; and
- dynamically constraining, by a fitting control interface operatively coupled to hearing-aid fitting software, selectable fitting parameters processed by the fitting software based on the determined subset of candidate hearing-aid system features, wherein execution of the instructions limits hearing-aid configuration to technically permissible parameter combinations correlated with the structured patient profile, thereby producing a further technical effect in the operation of the fitting software.

12. A hearing-aid fitting system comprising:
a hearing aid comprising signal-processing circuitry configurable by a plurality of fitting parameters; and
a fitting system comprising one or more processors and memory storing instructions which, when executed, cause the fitting system to:
- acquire patient-specific input data comprising structured intake data and recorded conversational audio data;
- process the patient-specific input data using at least one trained language-processing model to extract data descriptors indicative of hearing-related challenges;
- classify the extracted data descriptors into predefined hearing-related impact categories and generate a structured patient profile;
- determine, using a stored feature ontology that relates hearing-aid capabilities to hearing-related impact categories, a subset of candidate signal-processing features for the hearing aid; and
- dynamically constrain configuration of the hearing aid by limiting application of fitting parameter combinations to those corresponding to the determined subset of candidate signal-processing features,
whereby configuration of the hearing aid is restricted to technically permissible signal-processing states correlated with the structured patient profile.

13. The hearing-aid fitting system of claim 12, wherein the candidate signal-processing features comprise one or more of noise reduction parameters, directional microphone parameters, frequency-band gain parameters, or speech enhancement parameters.

14. The hearing-aid fitting system of claim 12 or 13, wherein the fitting system is configured to prevent transmission of fitting parameter sets to the hearing aid that violate the dynamically constrained configuration.

15. The hearing-aid fitting system of any of claims 12 to 14, wherein the fitting system comprises a remote computing system communicatively coupled to a local fitting workstation and configured to perform the processing and classification of the patient-specific input data.
